# EUROPÄISCHE PATENTSCHRIFT

(11) **EP 2 623 939 B1**
(45) Veröffentlichungstag und Bekanntmachung des Hinweises auf die Patenterteilung: **29.06.2016**
(21) Anmeldenummer: 12153822.7
(22) Anmeldetag: 03.02.2012
(51) Int. Cl.: G01D 5/38

(54) **Messwertgeber sowie System mit einer Antriebseinheit und einem Messwertgeber**
Measuring transducer and system with a drive unit and a measuring transducer
Dispositif d'établissement de valeurs de mesure ainsi que système doté d'une unité d'entraînement et d'un dispositif d'établissement de valeurs de mesure

(43) Veröffentlichungstag der Anmeldung: 07.08.2013
(73) Patentinhaber: Siemens Aktiengesellschaft, 80333 München (DE)
(72) Erfinder: Eckert, Rainer, 97616 Bad Neustadt / Herschfeld (DE); Wetzel, Ulrich, 91325 Adelsdorf (DE)

(56) Entgegenhaltungen:
- EP-A2- 0 628 791
- WO-A1-2012/004091
- DE-A1- 4 317 064
- GB-A- 2 465 575
- US-A- 5 341 211
- US-A1- 2009 284 723

## Beschreibung

Die Erfindung betrifft zunächst eine Antriebseinheit, die in zumindest zwei Freiheitsgraden beweglich ist, also zum Beispiel rotatorisch und translatorisch, bei der hinsichtlich der zumindest zwei Freiheitsgrade eine Positionsinformation erhältlich ist. Zum Erhalt einer solchen Positionsinformation ist ein Messwertgeber vorgesehen und damit betrifft die Erfindung insgesamt einerseits ein System mit einer solchen Antriebseinheit und einem solchen Messwertgeber sowie andererseits einen solchen Messwertgeber.

Bekannt ist die Verwendung von Hallsensoren zum Erhalt von Positionsinformationen. In Betracht kommt auch ein Zwei-Koordinaten-Geber, also ein Gebersystem, welches sich zur Erfassung von Positionsinformationen in Bezug auf unabhängige Freiheitsgrade nicht aus zwei Gebersystemen zusammensetzt, von denen eines eine axiale Position und eines einen Drehwinkel erfasst, sondern beide Größen mittels einer Einheit erfasst, in der die beiden bisher unabhängigen Gebersysteme zusammengefasst sind. Beispielhaft zu nennen wäre in diesem Zusammenhang eine Kombination zweier Inkrementalgeber. Im Hinblick auf eine Verwendung von Hallsensoren kommt in Betracht, einen Rotationskörper mit einem radial magnetisierten Permanentmagneten zu versehen und dessen Magnetfeld mit zumindest einem im Bereich einer Drehachse des Rotationskörpers, wenn entlang dieser Drehachse auch die Linearbewegung erfolgt, zu erfassen.

Aus der DE 43 25 743 C ist ein Mehrkoordinaten-Tastkopf bekannt, mit dem Positionsinformationen in Bezug auf zwei Freiheitsgrade generierbar sind. Aus der DE 38 42 032 C ist ein kugelgeführter 3-Koordinaten-Messtaster bekannt, mit dem sogar einen Erfassung von Positionsinformationen in Bezug die drei kartesischen Koordinaten möglich sein sollen.

Nachteilig bei diesen bekannten Systemen sind deren teilweise nicht unerheblich elektrische und mechanische Komplexität, wobei dieses besondere für die Tastköpfe gilt, sowie der notwendige Anbringungsort und daraus resultierende Probleme. Bei einem Hallsensor, der im Innern eines linear und rotatorisch beweglichen Rotationskörpers angebracht ist, muss zum Beispiel sichergestellt sein, dass weder der Sensor noch ein für dessen Halterung erforderlicher Träger bei einer Bewegung des Rotationskörpers mit diesem in mechanischen Kontakt kommt. Je nach Umfang der Längserstreckung des Rotationskörpers ist dafür mitunter ein aufwändiger Träger erforderlich.

Aus der EP 0 628 791 A ist eine Vorrichtung zur Erfassung einer rotatorischen Positionsinformationen durch Abtastung eines schraubenlinienförmigen diffraktiven Streifenmusters bekannt, bei der die ermittelten Positionsinformationen aufgrund der Ausdehnung des schraubenlinienförmigen Streifenmusters entlang der jeweiligen Rotationsachse in Variante hinsichtlich einer eventuellen nicht ganz exakten Positionierung eines das Streifenmuster abzutastenden Lesekopfes sein soll. Aus der US 5,341,211 A ist eine Vorrichtung zur absoluten zweidimensionalen Positionsmessung bekannt. Dafür werden eine Messwelle auf ein Hologramm mit einer absoluten Positionsinformation gerichtet und die Messwelle zusammen mit einer Referenzwelle aufgrund einer Interferenz zwischen Messwelle und Referenzwelle ausgewertet. Die DE 43 17 064 A beschreibt einen Ansatz, der ebenfalls auf einer Mess- und einer Interferenzwelle basiert. Das dort mit der Messwelle abgetastete Hologramm umfasst als Gitter ausgebildete Spuren, die sich hinsichtlich einer Anfangsphase unterscheiden.

Eine Aufgabe der Erfindung besteht darin, eine weitere Möglichkeit zur Erfassung zweier Positionsinformationen in Bezug auf mindestens zwei Freiheitsgrade einer Antriebseinheit anzugeben.

Diese Aufgabe wird erfindungsgemäß mit den Merkmalen der unabhängigen Ansprüche gelöst. Dazu ist bei einem Messwertgeber für eine Antriebseinheit, die in mindestens zwei Freiheitsgraden beweglich ist und auf einen Rotationskörper wirkt, insbesondere vorgesehen, dass als Messwertgeber eine Sende-/Empfangseinheit fungiert, die mit einer an dem Rotationskörper anbringbaren, diffraktiven und zweidimensionalen Maßverkörperung zusammenwirkt, indem mit der Sende-/Empfangseinheit die diffraktive, zweidimensionale Maßverkörperung abtastbar ist. Bei einer am Rotationskörper der Antriebseinheit angebrachten Maßverkörperung kann die Erfindung auch als System mit einer solchen Antriebseinheit und einen Messwertgeber aufgefasst werden. Die Lösung der Aufgabe erfolgt dann mit einem System mit einer Antriebseinheit und einem Messwertgeber, wobei die Antriebseinheit in mindestens zwei Freiheitsgraden beweglich ist und wobei die Antriebseinheit auf einen Rotationskörper wirkt, indem der Rotationskörper eine diffraktive, zweidimensionale Maßverkörperung aufweist und als Messwertgeber eine Sende-/Empfangseinheit fungiert, mit dem die diffraktive, zweidimensionale Maßverkörperung abtastbar ist.

Der Vorteil der Erfindung besteht darin, dass die Maßverkörperung berührungslos abtastbar ist und die Maßverkörperung in Form einer diffraktiven, zweidimensionale Maßverkörperung auf einer Außenoberfläche des Rotationskörpers aufgebracht werden kann, so dass sich auch die zu dessen Abtastung vorgesehene Sende-/Empfangseinheit außerhalb des Rotationskörpers befinden kann. Im Ergebnis ist die Anbringung der beiden zur Erfassung der Positionsinformationen erforderlichen Elemente weitgehend problemlos. Bei diesen Elementen handelt es sich einerseits um die zur Abtastung der Maßverkörperung vorgesehene Sende-/Empfangseinheit und andererseits um die diffraktive, zweidimensionale Maßverkörperung.

Bei dem oben genannten System handelt es sich bei den beiden Freiheitsgraden des Antriebssystems um einen ersten, translatorischen Freiheitsgrad und einem zweiten, rotatorischen Freiheitsgrad. Eine translatorische und eine nachfolgende oder gleichzeitige rotatorische Bewegung lässt sich besonders gut mit einer diffraktiven, zweidimensionalen Maßverkörperung erfassen, die auf einem bei solchen Bewegungsvorgängen ebenfalls mitbewegten Rotationskörper aufgebracht ist.

Wenn als Rotationskörper eine Motorwelle des Antriebssystems oder ein mit einer Motorwelle drehfest verbundener Zylinder fungiert, ist bei Verwendung der Motorwelle kein zusätzliches Element erforderlich. Bei Verwendung eines drehfest mit der Motorwelle verbundenen Zylinders besteht zusätzliche Flexibilität hinsichtlich der zum Anbringen der diffraktiven, zweidimensionalen Maßverkörperung zur Verfügung stehenden Fläche, denn bei einer Motorwelle mit einem vergleichsweise geringen Durchmesser kann für den mit der Motorwelle drehfest verbundenen Zylinder ein ausreichend großer Durchmesser gewählt werden, so dass die diffraktive, zweidimensionale Maßverkörperung in einer ausreichenden Auflösung auf der Außenoberfläche des Zylinders Platz findet.

Erfindungsgemäß ist vorgesehen, dass die diffraktive, zweidimensionale Maßverkörperung in kodierter Form absolute Positionsinformationen umfasst, die mit der Sende-/Empfangseinheit auslesbar sind. Indem direkt absolute Positionsinformationen auslesbar sind, zum Beispiel in der Form wie dies in der EP 1 677 081 B1 beschrieben ist, kann auf komplexe Auswertungen und Umrechnungen ansonsten erhältlicher Positionsinformationen verzichtet werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: einen Rotationskörper mit einer diffraktiven, zweidimensionalen Maßverkörperung und eine Sende-/Empfangseinheit zu deren Abtastung sowie
- FIG 2: eine graphische Veranschaulichung einer diffraktiven, zweidimensionalen Maßverkörperung.

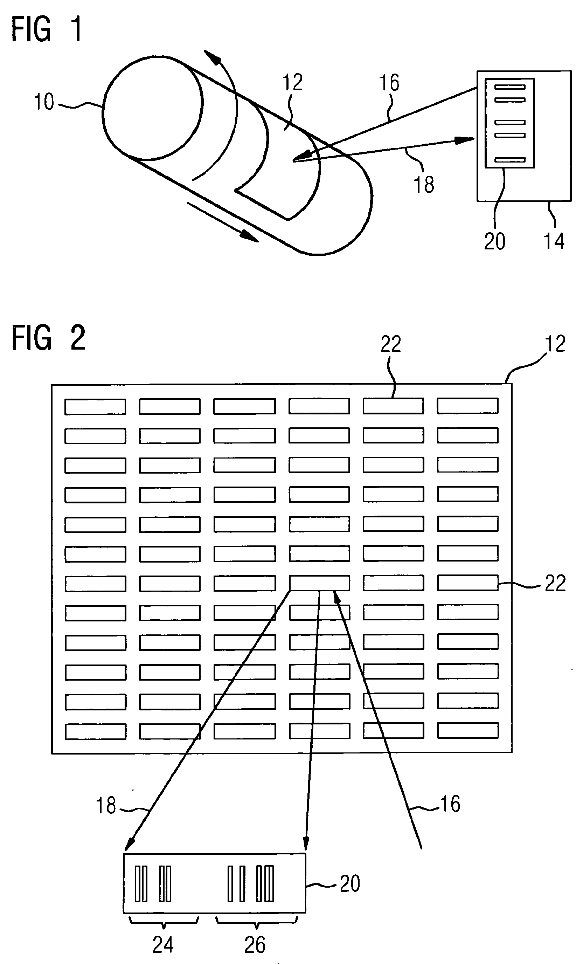

FIG 1 zeigt einen Rotationskörper 10 der, wie durch die Pfeile angedeutet, rotatorisch und translatorisch bewegbar ist. Der dargestellte Rotationskörper 10 ist ein schematisch vereinfachtes Beispiel für eine Motorwelle einer selbst nicht dargestellten, an sich bekannten Antriebseinheit oder für einen mit einer solchen Motorwelle drehfest verbundenen Zylinder. Der Rotationskörper 10 ist also Element eines Antriebssystems mit mindestens zwei Freiheitsgraden, nämlich einem rotatorischen Freiheitsgrad und einem translatorischen Freiheitsgrad. Ein solches Antriebssystem kommt in an sich bekannter Art und Weise beispielsweise zur Verwendung in einer Werkzeugmaschine, einen Roboter oder dergleichen in Betracht.

Auf dem Rotationskörper 10 befindet sich eine Maßverkörperung, bei der es sich um eine diffraktive, zweidimensionale Maßverkörperung 12 handelt. Diese ist mit einer ebenfalls nur schematisch vereinfacht darstellten Sende-/Empfangseinheit 14 abtastbar. Gezeigt ist dazu ein von der Sende-/Empfangseinheit 14 ausgehender Strahl 16, bei dem es sich normalerweise um einen Laserstrahl handelt, der auf die diffraktive, zweidimensionale Maßverkörperung 12 trifft und dort gebeugt und reflektiert wird. Zur Verdeutlichung der Reflektion ist ein von der diffraktiven, zweidimensionalen Maßverkörperung 12 ausgehender Strahl 18 gezeigt. Tatsächlich handelt es sich aufgrund der Diffraktion um ein Strahlenbüschel, das von der Sende-/Empfangseinheit 14 aufgenommen und ausgewertet wird.

Für die Situation, dass die diffraktive, zweidimensionale Maßverkörperung 12 in kodierter Form absolute Positionsinformationen umfasst, ist in der Darstellung in FIG 1 im Innern Sende-/Empfangseinheit 14 ein Muster 20 gezeigt, wie es sich aufgrund einer Reflektion/Diffraktion an der Maßverkörperung 12 ergeben kann. Das Muster 20 ist nach einem Binärcode auswertbar, so dass sich unmittelbar die jeweilige Positionsinformation ergibt.

FIG 2 ist eine schematisch vereinfachte Darstellung eines Ausschnitts aus einer diffraktiven, zweidimensionale Maßverkörperung 12. Die Darstellung versucht zu zeigen, dass die Maßverkörperung 12 eine Vielzahl von in Zeilen und Spalten angeordneten Positionen 22 umfasst. Dabei handelt es sich um diffraktiv wirkende mikrostrukturierte Felder. Wenn die Sende-/Empfangseinheit eine dieser Positionen 22 mit einem Sendestrahl 16 abtastet, kommt es zu einer Reflektion/Diffraktion 18, wie diese ebenfalls schematisch vereinfacht und für den Sonderfall einer Kodierung von absoluten Positionsinformationen in FIG 2 gezeigt ist. Dort ist dargestellt, dass das resultierende Muster 20 einen ersten und einen zweiten Teil 24, 26 umfasst, wobei der erste Teil 24 zum Beispiel eine Positionsinformation hinsichtlich einer translatorischen Position des Rotationskörpers 10 und der zweite Teil 26 ein Positionsinformation hinsichtlich einer rotatorischen Position des Rotationskörpers 10 wiedergibt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Messwertgeber für eine Antriebseinheit, die in mindestens zwei Freiheitsgraden beweglich ist und auf einen Rotationskörper 10 wirkt, wobei als Messwertgeber eine Sende-/Empfangseinheit 14 fungiert, die mit einer an dem Rotationskörper 10 anbringbaren, diffraktiven und zweidimensionale Maßverkörperung 12 zusammenwirkt, indem mit der Sende-/Empfangseinheit 14 die diffraktive, zweidimensionale Maßverkörperung 12 abtastbar ist, sowie ein System mit einer solchen Antriebseinheit und einem solchen Messwertgeber.

## Patentansprüche

1. Messwertgeber für eine Antriebseinheit, die in mindestens zwei Freiheitsgraden beweglich ist und auf einen Rotationskörper (10) wirkt,
wobei als Messwertgeber eine Sende-/Empfangseinheit (14) fungiert, die mit einer an dem Rotationskörper (10) anbringbaren, diffraktiven und zweidimensionalen Maßverkörperung (12) zusammenwirkt,
indem mit der Sende-/Empfangseinheit (14) die diffraktive, zweidimensionale Maßverkörperung (12) abtastbar ist,
**dadurch gekennzeichnet,**
**dass** die diffraktive zweidimensionale Maßverkörperung (12) in Zeilen und Spalten angeordnete diffraktiv wirkende mikrostrukturierte Felder (22) umfasst, die in kodierter Form jeweils absolute Positionsinformationen umfassen, die mit der Sende-/Empfangseinheit (14) auslesbar sind,
**dass** ein aufgrund einer Abtastung eines mikrostrukturierten Feldes (22) jeweils resultierendes und nach einem Binärcode auswertbares Muster (20) einen ersten und einen zweiten Teil (24, 26) umfasst, wobei der erste Teil (24) eine Positionsinformation hinsichtlich einer translatorischen Position des Rotationskörpers (10) und der zweite Teil (26) eine Positionsinformation hinsichtlich einer rotatorischen Position des Rotationskörpers (10) wiedergibt.

2. System mit einer Antriebseinheit und einem Messwertgeber nach Anspruch 1, wobei die Antriebseinheit einen ersten, translatorischen Freiheitsgrad und einen zweiten, rotatorischen Freiheitsgrad aufweist, wobei die Antriebseinheit auf einen Rotationskörper (10) wirkt, der eine diffraktive, zweidimensionale Maßverkörperung (12) aufweist, welche in Zeilen und Spalten angeordnete diffraktiv wirkende mikrostrukturierte Felder (22) umfasst, die in kodierter Form jeweils absolute Positionsinformationen umfassen, wobei als Messwertgeber eine Sende-/Empfangseinheit (14) fungiert, mit dem die diffraktive, zweidimensionale Maßverkörperung (12) abtastbar ist und wobei ein aufgrund einer Abtastung eines mikrostrukturierten Feldes (22) jeweils resultierendes und nach einem Binärcode auswertbares Muster (20) einen ersten und einen zweiten Teil (24, 26) umfasst, wobei der erste Teil (24) eine Positionsinformation hinsichtlich einer translatorischen Position des Rotationskörpers (10) und der zweite Teil (26) eine Positionsinformation hinsichtlich einer rotatorischen Position des Rotationskörpers (10) wiedergibt.

3. System nach Anspruch 2, wobei der Rotationskörper (10) eine Motorwelle oder ein mit einer Motorwelle drehfest verbundener Zylinder ist.

## Claims

1. Measuring transducer for a drive unit, which can be moved in at least two degrees of freedom and acts on a rotary body (10),
wherein a transceiver unit (14) serves as a measuring transducer which cooperates with a diffractive and two-dimensional material measuring unit (12) which can be attached to the rotary body (10),
in that the diffractive, two-dimensional material measuring unit (12) can be scanned using the transceiver (14),
**characterised in that**
the diffractive, two-dimensional material measuring unit (12) comprises diffractively acting microstructured fields (22) arranged in lines and columns, each of said fields comprising in encoded form absolute position information which can be read out using the transceiver (14),
that a pattern (20) resulting in each case from a scan of a microstructured field (22) and which can be evaluated in accordance with a binary code comprises a first and a second part (24, 26), wherein the first part (24) reproduces position information in respect of a translatory position of the rotary body (10) and the second part (26) reproduces position information in respect of a rotary position of the rotary body (10).

2. System having a drive unit and a measuring transducer according to claim 1, wherein the drive unit has a first translatory degree of freedom and a second rotary degree of freedom, wherein the drive unit acts on a rotary body (10) which has a diffractive, two-dimensional material measuring unit (12) which comprises diffractively acting microstructured fields (22) arranged in lines and columns, each of said fields comprising absolute position information in encoded form, wherein a transceiver unit (14) serves as a measuring transducer (14), with which the diffractive, two-dimensional measuring transducer (12) can be scanned and wherein a pattern (20) resulting in each case from a scan of a microstructured field (22) and which can be evaluated in accordance with a binary code comprises a first and a second part (24, 26), wherein the first part (24) reproduces position information in respect of a translatory position of the rotary body (10) and the second part (26) reproduces position information in respect of a rotary position of the rotary body (10).

3. System according to claim 2, wherein the rotary body (10) is a motor shaft or a cylinder connected in a rotationally fixed manner to a motor shaft.

## Revendications

1. Dispositif d'établissement de valeur de mesure pour une unité d'entraînement mobile suivant au moins deux degrés de liberté et agissant sur un corps ( 10 ) de révolution,
dans lequel sert de dispositif d'établissement de valeur de mesure une unité ( 14 ) d'émission/réception, qui coopère avec une matérialisation ( 12 ) de mesure pouvant être mise sur le corps ( 10 ) de révolution, de diffraction et en deux dimensions,
par le fait que la matérialisation ( 12 ) de mesure de diffraction et en deux dimensions peut être détectée par l'unité ( 14 ) d'émission/réception,
**caractérisé**
**en ce que** la matérialisation ( 12 ) de mesure de diffraction et en deux dimensions comprend des champs ( 22 ) microstructurés, qui sont divisés en lignes et en colonnes, qui agissent par diffraction et qui comprennent sous forme codée respectivement des informations de position absolues déchiffrables par l'unité ( 14 ) d'émission/réception,
**en ce qu'**un motif ( 20 ) provenant d'une détection d'un champ ( 22 ) microstructuré et pouvant être exploité suivant un code binaire, comprend une première et une deuxième parties ( 24, 26 ), la première partie ( 24 ) reproduisant une information de position en ce qui concerne une position en translation du corps ( 10 ) de révolution et la deuxième partie ( 26 ) une information de position en ce qui concerne une position en rotation du corps ( 10 ) de révolution.

2. Système ayant une unité d'entraînement et un dispositif d'établissement de valeur de mesure suivant la revendication 1, dans lequel l'unité d'entraînement a un premier degré de liberté en translation et un deuxième degré de liberté en rotation, l'unité d'entraînement agissant sur un corps ( 10 ) de révolution, qui a une matérialisation ( 12 ) de mesure de diffraction et en deux dimensions, matérialisation qui comprend des champs ( 22 ) microstructurés, qui sont disposés en lignes et en colonnes, qui agissent par diffraction et qui comprennent sous forme codée respectivement des informations de position absolues, dans lequel, comme dispositif d'établissement de valeur de mesure sert une unité ( 14 ) d'émission/réception, par laquelle la matérialisation ( 12 ) de mesure de diffraction et en deux dimensions peut être détectée et dans lequel la matérialisation ( 12 ) de mesure de diffraction et en deux dimensions comprend des champs ( 22 ) microstructurés, qui sont divisés en lignes et en colonnes, qui agissent par diffraction et qui comprennent sous forme codé respectivement des informations de position absolues déchiffrables par l'unité ( 14 ) d'émission/réception, et dans lequel un motif ( 20 ), provenant d'une détection d'un champ ( 22 ) microstructuré et pouvant être exploité suivant un code binaire, comprend une première et une deuxième parties ( 24, 26 ), la première partie ( 24 ) reproduisant une information de position en ce qui concerne une position en translation du corps ( 10 ) de révolution et la deuxième partie ( 26 ) une information de position en ce qui concerne une position en rotation du corps ( 10 ) de révolution.

3. Système suivant la revendication 2, dans lequel le corps ( 10 ) de révolution est un arbre de moteur ou un cylindre solidaire en rotation d'un arbre de moteur.
